Europäisches Patentamt

European Patent Office

Office européen des brevets

(19)

(11) Publication number: **0 439 016 A1**

## EUROPEAN PATENT APPLICATION

(21) Application number: **91100144.4**

(22) Date of filing: **04.01.91**

(51) Int. Cl.⁵: **H02K 11/00**

(30) Priority: **12.01.90 JP 1857/90**

(43) Date of publication of application:
**31.07.91 Bulletin 91/31**

(84) Designated Contracting States:
**DE FR GB**

(71) Applicant: **MITSUBA ELECTRIC
MANUFACTURING CO., LTD.
2681, Hirosawacho 1-chome
Kiryu Gunma(JP)**

(72) Inventor: **Ishida, Hisashi
538-1, Kamiohshima-machi
Maebashi-shi, Gunma(JP)**
Inventor: **Inaba, Yukio
2235-3, Hongo
Fujioka-shi, Gunma(JP)**

(74) Representative: **Leyh, Hans, Dr.-Ing. et al
Patentanwälte Berendt, Leyh & Hering Innere
Wiener Strasse 20
W-8000 München 80(DE)**

(54) **Rectifier device in alternating current generator for motor vehicle.**

(57) A rectifier device (9) in an Alternating Current generator (1) mounted on a motor vehicle such as an automobile. In this rectifier device (9), are integrally mounted diodes (D) on a pair of mounting plates (10). Each of the mounting plates (10) is formed of hollow portions extending therethrough in the direction of flow of cooling air, and, in each of hollow portions, fin members formed of wave-shaped metal sheets being laminated at predetermined intervals are integrally fixed by soldering. The fin members are provided with raised louvers.

Fig. 1

Fig. 2B

Fig. 2B

EP 0 439 016 A1

Xerox Copy Centre

## RECTIFIER DEVICE IN ALTERNATING CURRENT GENERATOR FOR MOTOR VEHICLE

### BACKGROUND OF THE INVENTION

#### 1. Field of the Invention

This invention relates to a rectifier device in an AC generator, mounted on motor vehicles such as a private car, a bus and a truck.

#### 2. Related Art Statement

In general, in an AC generator for a motor vehicle of the type described, a rectifier device having diodes is provided to rectify a generated alternating current into a direct current. In the rectifier device of this type, it is necessary to efficiently radiate the heat of the diodes in order to improve the rectifying efficiency. The rectifier device of this type is disclosed in U.S. Patent No. 4,841,182 for example.

However, since the conventional rectifier device has been one radiating by cooling fins formed integrally by aluminum die casting and the like, it has been difficult to increase the cooling area from manufacturing viewpoint, so that, a high output cannot be attained and the size cannot be made compact through the improvement of the cooling efficiency (rectifying efficiency).

Furthermore, the conventional rectifier device are disclosed in U.S. Patent Nos. 4,919,597, 3,863,127 and 3,538,362 for example, and all of these rectifier devices include problems to be improved in respect of radiating efficiently, producing the high output and making the size compact.

### SUMMARY OF THE INVENTION

The present invention has been developed to obviate the above-described disadvantages and has an object of providing a rectifier device in an AC generator for a motor vehicle which realizes the improvement in the radiating efficiency, producing a high output and making the size compact.

To achieve this object, a rectifier device according to the present invention is characterized in that, in an AC generator for a motor vehicle, wherein the rectifier device for rectifying a generated alternating current into a direct current is formed such that diodes are integrally mounted on mounting plates, hollow portions extending through a direction of flow of cooling air are formed in the mounting plates, and a fin members, which are formed as laminated thin sheets arranged with intervals therebetween, are integrally housed in the hollow portions.

With this arrangement, the present invention can highly improve the cooling efficiency to realize producing a high output and making the size compact of the AC generator for a motor vehicle.

### BRIEF DESCRIPTION OF THE DRAWINGS

The drawings show embodiments of the rectifier device in the AC generator for a motor vehicle according to the present invention, in which;

Fig.1 is a sectional view showing the AC generator for a motor vehicle;

Fig.2A, 2B and 2C are a front view, a bottom view and a side view showing the rectifier device illustrated in a first embodiment;

Fig.3 is a perspective view showing the essential portion of the first embodiment;

Fig.4A, 4B and 4C are a front view, a bottom view and a side view showing the rectifier device illustrated in a second embodiment;

Fig.5A, 5B and 5C are a front view, a bottom view and a side view showing the rectifier device illustrated in a third embodiment; and

Fig.6A and 6B are a front view and side view showing the rectifier device illustrated in a fourth embodiment.

### DETAILED DESCRIPTION OF THE PREFERRED EMBODIMENTS

Referring to the drawings, designated at reference numeral 1 is an AC generator for a motor vehicle. In the same manner as in the conventional AC generators, this AC generator 1 is constituted by members including a pair of case bracket 1a and 1b for rotatably supporting a rotor shaft 2 by bearings 2a and 2b; a pulley 2c fixed at an end of the rotor shaft 2; a Lundell type rotor core 3 pressed and fixed into the rotor shaft 2; a rotor coil 5 wound round a coil bobbin 4 coupled into the rotor core; a stator core 6 wound therearound with a stator coil 6a; brushes 7 each resiliently housed in a brush holder 7a; slip rings 8 with which the brushes 7 are in slidable contact; and a rectifier device 9 for rectifying a generated alternating current into a direct current and so forth. Further, denoted at reference numeral 1c is a mounting hole for mounting the generator to an engine block, not shown.

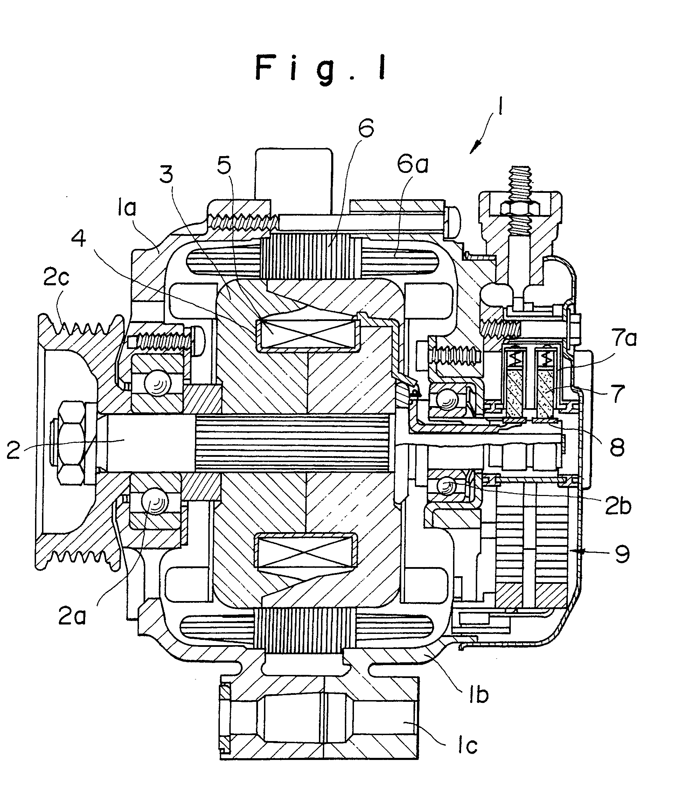

As shown in Fig. 1, a pair of fans is fixedly secured to the both sides of the rotor core 3, and, by these fans, cooling air is intaked in the axial direction of the rotor core 3 toward the rotor core 3 and discharged in the radial direction of the rotor core 3 when the rotor shaft 2 is rotated.

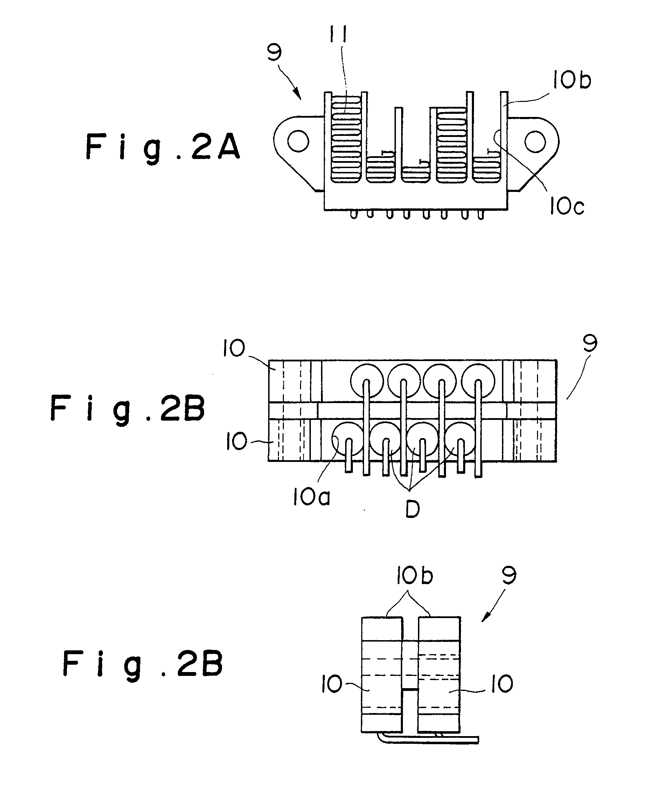

As shown in Figs. 2A through 2C, the rectifier device 9 is formed such that a pair of mounting plates 10 formed by aluminum die casting are stacked with an interval being formed therebetween in the direction of an axis of the rotor shaft 2 and diodes D are integrally mounted in mounting holes 10a formed in the bottom surfaces of the mounting plates 10. A plurality of wall plates 10b projecting upwardly are parally provided on each of the mounting plates 10 at predetermined intervals formed therebetween in the lateral direction, whereby, recessed groove-shaped hollow portions 10c extending through the direction of flow of cooling air (the direction of axis of the rotor 2) are formed. The top portions of the hollow portion 10c are open. In this embodiment, the mounting plates 10 themselves constitute electrodes of diodes D.

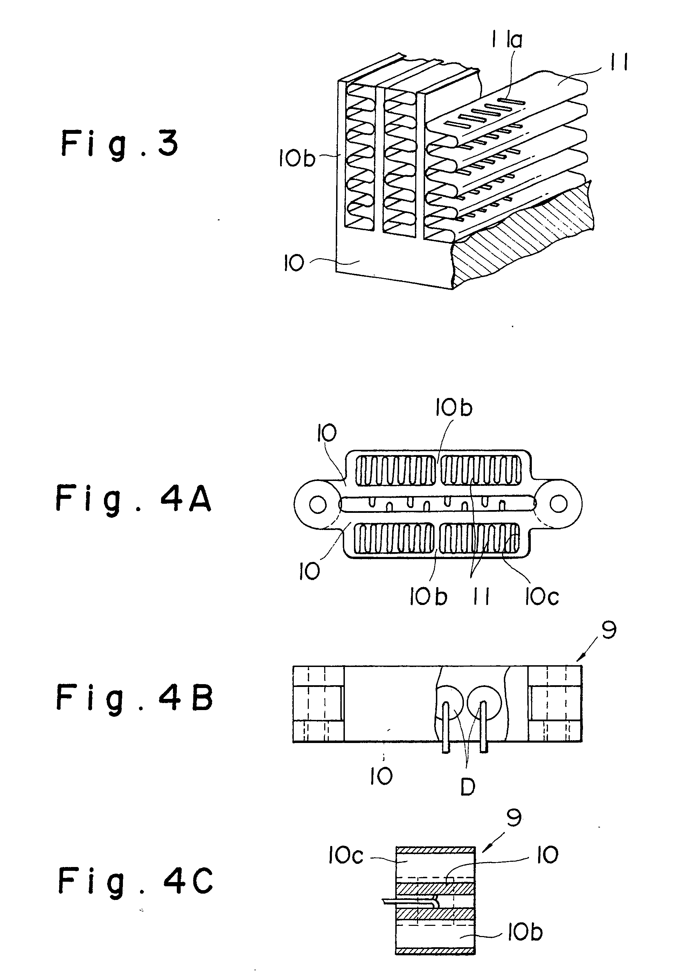

Further, designated at 11 are fin members. As shown in Fig. 3, in each of the fin members 11, thin metal sheets such for example as copper sheets or aluminum sheets are bent to provide wave-shaped sheets, the waves thus resulted forming predetermined intervals therebetween. These fin members 11 are integrally housed in the hollow portions 10c, respectively. In short, in this embodiment, the fin members 11 are solidly secured to the mounting plates 10 by soldering in a state where the fin members 11 are in contact with the inner wall surfaces of the hollow portions 10c of the mounting plates 10 formed by aluminum die casting. In the rectifier device 10, the heat from the diodes D can be highly efficiently radiated by the wave-shaped fin members 11 having a large cooling area and a high thermal conductivity. Further, the fin member 11 is formed with a plurality of raised louvers 11a. Moreover, the cooling efficiency is improved through the rectifying action by the louvers 11a.

In this embodiment with the above-described arrangement, the heat from the diodes D is radiated highly efficiently by the wave-shaped fin members 11 having the large cooling area and the high thermal conductivity. Accordingly, the fin members 11 can realize a high rectifying efficiency which has not been attainable at all by the mounting plates formed by aluminum die casting because the mounting plates is difficult in increasing the cooling area. As a result, this, further, largey contributes to producing of the high output and making the size compact in the AC generator for a motor vehicle.

Moreover, in this embodiment, the cooling efficiency is further improved by forming the louvers 11a on the fin members 11, so that producing of the high output and making the size compact can be further attained.

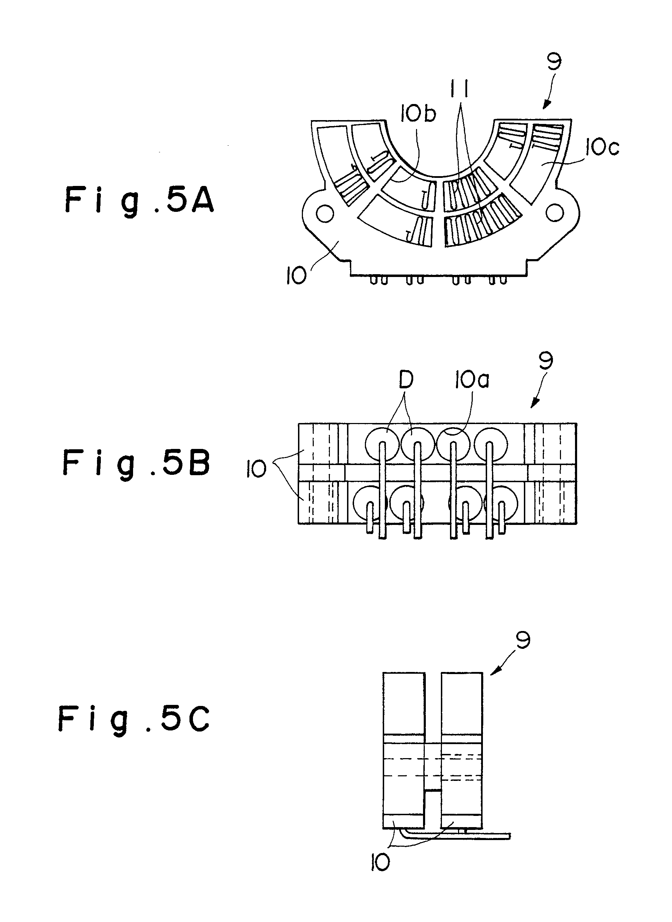

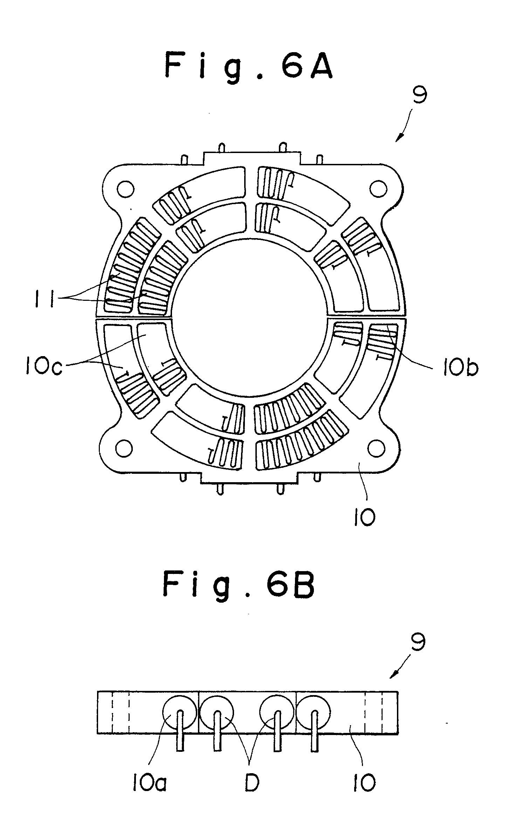

Incidentally, the present invention should not necessarily be limited to the above-described embodiment. For example, the fin members can be used as far as it is formed of laminated thin sheets with spaces being formed therebetween, and it is needless to say that the fin members are not limited to the wave-shaped ones. Furthermore, the present invention can be effected in the rectifier devices of various types, and there are the rectifier devices including one as shown in Fig. 4 in which a pair of mounting plates 10 are disposed respectively above and below and the hollow portions 10c are formed of closed spaces arranged above and below in two rows, another one in which a pair of mounting plates 10 are formed into a horse shoe shape and the hollow portions 10c are formed of closed spaces arranged into two rows in a fan shape as shown in Fig.5, and the other one in which the mounting plates 10 are arranged in a circle and the hollow portions 10c are formed of closed spaces arranged into two rows in an annular shape as shown in Fig.6, for examples.

As has been described hereinabove, according to the present invention with the above-described arrangement, the diodes are integrally mounted on the mounting plates to rectifying the generated alternating current into the direct current, so that the heat from the diodes is highly efficiently radiated by the fin members formed of the laminated thin sheets with the intervals being formed therebetween in order to attain the large cooling area and the high thermal conductivity. Accordingly, the very high rectifying efficiency which has not been realized at all by the mounting plates formed by aluminum die casting, being difficult in increasing the cooling area, can be attained, with the result that, in an alternating generator for a motor vehicle, producing of the very high output and making the size compact can be attained.

**Claims**

1. A rectifier device in an Alternating Current generator for a motor vehicle which rectifies an Alternating Current generated into a Direct Current, comprising:
   mounting plates on which diodes are mounted integrally, each of said mounting plates being formed with hollow portions extending therethrough in the direction of flow of cooling air, and fin members formed of laminated thin sheets each having intervals therebetween and being integrally housed in said hollow portions.

2. The rectifier device as set forth in claim 1, wherein:
   said fin members are solidly secured to the inner wall surfaces of said hollow portions by soldering.

3. The rectifier device as set forth in claim 1, wherein:

said fin members are formed of thin metal sheets formed to provide wave-shaped sheets and having a high thermal conductivity.

4. The rectifier device as set forth in claim 3, wherein:
said fin members are formed of material selected from the group consisting of copper sheet and aluminum sheet, and bent to provide wave-shaped sheets.

5. The rectifier device as set forth in claim 1, wherein:
each of said fin members is formed with a plurality of raised louvers.

6. The rectifier device as bet forth in claim 1, wherein:
said mounting plates themselves constitute electrodes of diodes, respectively.

7. The rectifier device as set forth in claim 1, wherein:
said hollow portions are open spaces, respectively.

8. The rectifier device as set forth in claim 7, wherein:
said mounting plates each has a construction in which a plurality of wall plates projecting upwardly are parallely provided at predetermined intervals in the lateral direction, and
said hollow portions are formed as recessed grooves being open upwardly between a plurality of wall plates.

9. The rectifier device as set forth in claim 1, wherein:
said hollow portions are formed of spaces closed at the tops, respectively.

10. The rectifier device as set forth in claim 9, wherein:
a pair of mounting plates are arranged respectively above and below, and
said hollow portions are each formed of closed spaces arranged respectively above and below in two rows.

11. The rectifier device as set forth in claim 9, wherein
said mounting plates are formed in a horse shoe shape, and
said hollow portions are each formed of closed spaces arranged in fan shapes in two rows.

12. The rectifier device as set forth in claim 9, wherein:

said mounting plates are each formed in a circle, and
said hollow portions are each formed of closed spaces arranged in an annular shape in two rows.

# Fig. 1

Fig.2A

9  11  10b  10c

Fig.2B

10  9  10  10a  D

Fig.2B

10b  9  10  10

Fig. 3

Fig. 4A

Fig. 4B

Fig. 4C

Fig.5A

Fig.5B

Fig.5C

# Fig.6A

# Fig.6B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 210 090   (DUCELLIER ET CIE) <br> * page 5, line 23 - page 7, line 6; figures 1a, 2b * | 1 | H 02 <br> K 11/00 |
| Y,D | GB-A-2 195 834   (MITSUBA ELECTRIC) <br> * page 3, line 35 - page 4, line 44; figures 3-6B & US-A-4841182 * | 1 | |
| A | US-A-4 890 050   (D. A. MACKEVICH) <br> * column 5, lines 22 - 61; figures 2, 5 * | 1 | |
| A | DE-A-2 838 966   (R. BOSCH) <br> * page 6, last paragraph - page 7, last paragraph * * page 15, paragraphs 1 - 2; figures 1, 3 * | 1 | |
| A | PATENT ABSTRACTS OF JAPAN vol. 5, no. 117 (E-67)(789) 28 July 1981, <br> & JP-A-56 056147 (NIPPON DENSO K.K.) 18 May 1981, <br> * the whole document * | 1 | |

TECHNICAL FIELDS
SEARCHED (Int. Cl.5)

H 02 K 9/00
H 02 K 11/00

The present search report has been drawn up for all claims

| Place of search | Date of completion of search | Examiner |
|---|---|---|
| Berlin | 08 April 91 | GESSNER E A F |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

& : member of the same patent family, corresponding
   document